(19) Europäisches Patentamt
European Patent Office
Office européen des brevets

(11) Veröffentlichungsnummer: **0 216 106 B1**

(12) # EUROPÄISCHE PATENTSCHRIFT

(45) Veröffentlichungstag der Patentschrift: **13.05.92**

(51) Int. Cl.$^5$: **C08G 64/00**

(21) Anmeldenummer: **86111106.0**

(22) Anmeldetag: **12.08.86**

(54) **Verfahren zur Herstellung von Vorkondensaten mit Diphenolcarbonat-Endgruppen.**

(30) Priorität: **22.08.85 DE 3529984**

(43) Veröffentlichungstag der Anmeldung:
**01.04.87 Patentblatt 87/14**

(45) Bekanntmachung des Hinweises auf die Patenterteilung:
**13.05.92 Patentblatt 92/20**

(84) Benannte Vertragsstaaten:
**DE FR GB IT NL**

(56) Entgegenhaltungen:
**EP-A- 0 008 724** **DE-A- 2 455 025**
**FR-A- 2 161 107** **GB-A- 1 121 866**
**US-A- 3 379 790** **US-A- 3 419 634**

(73) Patentinhaber: **BAYER AG**
**W-5090 Leverkusen 1 Bayerwerk(DE)**

(72) Erfinder: **Schreckenberg, Manfred, Dr.**
**Bärenstrasse 14**
**W-4150 Krefeld 1(DE)**
Erfinder: **König, Klaus, Dr.**
**zum Hahnenberg 40**
**W-5068 Odenthal(DE)**

**EP 0 216 106 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist ein Verfahren zur Herstellung von Vorkondensaten mit Diphenolcarbonat-Endgruppen der Formel (I)

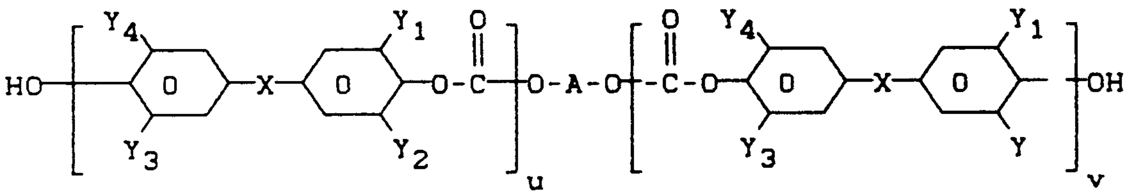

(I)

worin

X eine Einfachbindung, $C_1$-$C_5$-Alkylen wie beispielsweise $-CH_2-$, $C_2$-$C_5$-Alkyliden, wie beispielsweise

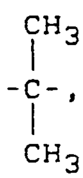 oder 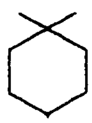 , -O-, -S-, $-SO_2-$, 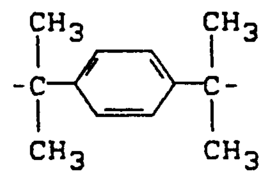 oder

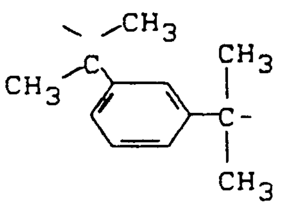 bedeutet und

$Y_1$ bis $Y_4$ gleich oder verschieden sind und Wasserstoff, $C_1$-$C_4$-Alkyl, wie beispielsweise Methyl, oder Halogen, wie beispielsweise Chlor oder Brom, bedeuten und

u und v unabhängig voneinander eine ganze Zahl von 1 bis 4 sind, vorzugsweise zusammen maximal 6 sind und insbesondere u = v = 1 ist,

-O-A-O- ein aliphatischer Diolatrest ist, der über Carbonatgruppen verlängert sein kann,

das dadurch gekennzeichnet ist, daß man aromatische Polycarbonate der Formel (II)

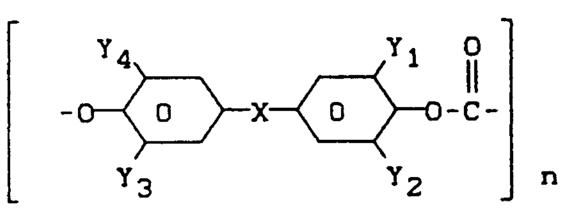

(II)

worin

X und $Y_1$-$Y_4$ die für Formel (I) genannte Bedeutung haben, und n eine ganze Zahl von 4 bis 1200, vorzugsweise von 80 bis 800 ist,

mit aliphatischen Diolen HO-A-OH mit mittleren Molekulargewichten $\overline{M}n$ (Zahlenmittel) von 300 bis 15000, vorzugsweise von 500 bis 10000 entweder in der Schmelze bei Temperaturen von 160° C bis 250° C, vorzugsweise von 190° C bis 220° C, oder in Lösung eines organischen Lösungsmittels für das herzustellende Polymere mit Diphenolcarbonat-Endgruppen gegebenenfalls in Gegenwart von Katalysatoren

innerhalb von 2 bis 60 Stunden umestert, wobei pro Mol aliphatisches Diol 1,4 bis 10, vorzugsweise 1,6 bis 6 und besonders bevorzugt 1,8 bis 3 und insbesondere 2 Struktureinheiten der Formel (II) eingesetzt werden.

Die Formel (I) stellt eine idealisierte Darstellung der erhaltenen Reaktionsprodukte dar.

Geeignete aliphatische Diole HO-A-OH sind Polyesterdiole, Polyetherdiole, Polysiloxandiole, Polythioetherdiole, Polyacetaldiole und aliphatische Polycarbonatdiole.

Geeignete Lösungsmittel sind aromatische Kohlenwasserstoffe wie beispielsweise Chlorbenzol, Xylol, Alkylbenzol, Toluol und Benzol sowie höhermolekulare aromatische Kohlenwasserstoffe, aber auch aliphatische, halogenierte Kohlenwasserstoffe wie beispielsweise $CH_2Cl_2$, Chloroform oder Tetrachlorkohlenstoff. Die Durchführung der Reaktion in Lösung kann zwischen Raumtemperatur und etwa 250° C erfolgen, wobei in Abhängigkeit von der Siedetemperatur des Lösungsmittels gegebenenfalls Drücke bis etwa 20 bar, vorzugsweise bis etwa 6 bar anzuwenden sind.

Geeignete Katalysatoren für das erfindungsgemäße Verfahren sind

a) Übergangsmetallverbindungen wie
Titansäuretetraalkylester,
Dialkylzinndicarboxylate,
Zinndicarboxylate,
Chelate von Fe, Zn, Co, Ni, Pb,
Carboxylate von Pb, Co, Ni, Fe und

b) Basen wie tertiäre Amine oder Oxide, Hydroxide, Carbonate, Alkoholate, Phenolate oder Carboxylate von Alkali- oder Erdalkalimetallen.

Die Katalysatoren werden in Mengen zwischen 0,0001 bis 1 Gew.-%, vorzugsweise 0,001 bis 0,1 Gew.-%, bezogen auf das Gesamtgewicht des eingesetzten Reaktionsgemisches, verwendet.

Die erhaltenen Vorkondensate mit Diphenolcarbonat-Endgruppen sind bekannte Verbindungen (siehe beispielsweise DE-OS 26 36 784 (Le A 17 025), DE-OS 27 26 376 (Le A 18 015), DE-OS 28 27 325 (Le A 18 819) und DE-OS 28 37 526 (Le A 18 995)), mit Ausnahme derjenigen, die auf Basis der hydroxyfunktionellen Polysiloxane erhalten werden können.

Gegenstand der vorliegenden Erfindung sind somit auch nach dem erfindungsgemäßen Verfahren erhältliche Vorkondensate der Formel (I), worin -O-A-O- ein Rest der Formel (IVa) ist,

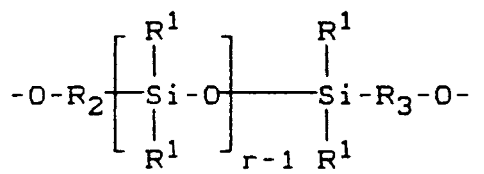

(IVa)

worin $R^1$ ein aliphatischer, cycloaliphatischer, araliphatischer oder aromatischer Rest ist, der noch durch Halogen oder Cyan oder Alkyl substituiert sein kann, und worin $R_2$ und $R_3$ aliphatische oder cycloaliphatische Reste sind, und worin r eine ganze Zahl von 5 bis 200, vorzugsweise 15 bis 90 ist.

Die erhaltenen Vorkondensate sind beispielsweise geeignet zur Herstellung von Blockcopolycarbonaten nach dem Phasengrenzflächenverfahren, da sie phenolische OH-Endgruppen enthalten.

Bislang erfolgte die Herstellung derartiger Produkte mit Diphenolcarbonat-Endgruppen entweder zweistufig (siehe beispielsweise DE-OS 26 36 784 und DE-OS 27 26 376) oder einstufig mit Diphenylcarbonat unter Abspaltung von Phenol (siehe DE-OS 28 27 325 und DE-OS 28 37 526). Das vorliegende Verfahren hat den Vorteil, daß die Abspaltung und damit die Abtrennung von Phenol sehr reduziert oder sogar ganz vermieden werden kann, was unter anderem apparative Vorteile hat.

Bislang diente das Einwirken von Polycarbonat in der Schmelze auf Polyester zum Aufbau von Polymeren mit Kohlensäureester- und Carbonsäureesterstrukturen (siehe beispielsweise DE-OS 14 20 232 bzw. GB-PS 898 775, insbesondere Beispiel 4, GB-PS 954 500, Beispiel 5, GB-PS 1 139 412, Seite 3, linke Spalte, DE-OS 2 919 629, DE-OS 30 39 066 sowie "Polymer Engineering and Science", März 1982, Vol. 22, No. 4).

Gemäß DE-OS 24 55 025 ist die Herstellung von Carbonatgruppen enthaltenden thermoplastischen Polyestern bekannt, indem man lineare, hydroxylgruppenhaltige Polyester mit aromatischen Polycarbonaten reagieren läßt. Hierbei können unter Abbau des Polycarbonats Carbonatgruppen und/oder ganze Polycarbonatsegmente in den Polyester eingebaut werden. Das Verfahren führt jedoch nicht zu den Verfahrensprodukten der vorliegenden Erfindung.

Schließlich ist noch aus der DE-OS 33 20 260 (Le A 22 153) die Herstellung von Diphenolestern von Carbonsäuren durch Umsetzung von Carbonsäuren mit hochmolekularen Polycarbonaten bekannt.

Die aromatischen Polycarbonate gemäß Formel (II) sind bekannte Stoffe (siehe dazu beispielsweise US-Patent 30 28 365 sowie "H. Schnell, Chemistry and Physics of Polycarbonates, Interscience Publishers, New York, 1964"). Ihre mittleren Gewichtsmittelmolekulargewichte $\overline{M}w$ liegen zwischen 1000 und 300 000, vorzugsweise zwischen 20 000 bis 200 000, ermittelt mittels Lichtzerstreuung.

Bevorzugte Polycarbonate der Formel (II) sind Homopolycarbonate oder Copolycarbonate, in denen X $CH_2$,

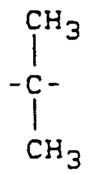 , 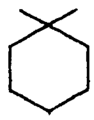 oder -S- ist,

und $Y_1$ bis $Y_4$ H, Br oder $CH_3$ sind.

Bei Einsatz von Copolycarbonaten ergeben sich konsequenterweise Gemische von Verbindungen der Formel (I).

Besonders bevorzugte Polycarbonate der Formel (II) sind solche auf Basis von
2,2-Bis-(4-hydroxyphenyl)-propan,
1,1-Bis-(4-hydroxyphenyl)-cyclohexan,
2,2-Bis-(3,5-dichlor-4-hydroxyphenyl)-propan,
2,2-Bis-(3,5-dibrom-4-hydroxyphenyl)-propan,
2,2-Bis-(3,5-dimethyl-4-hydroxyphenyl)-propan,
Bis-(3,5-dimethyl-4-hydroxyphenyl)-methan und
Bis-(4-hydroxyphenyl)-sulfid.

Die Polycarbonate der Formel (II) können in üblicher Weise Phenylendgruppen haben, was durch Herstellung der Polycarbonate mit den üblichen phenolischen Kettenabbrechern erreicht wird. Übliche Kettenabbrecher sind neben Phenol beispielsweise p-tert.-Butylphenol, p-Chlorphenol und 2,4,6-Tribromphenol. Die Polycarbonate der Formel (II) können jedoch auch ohne Kettenabbrecher in bekannter Weise hergestellt sein.

Eventuell bei dem erfindungsgemäßen Verfahren entstehendes Phenol, das in umso geringerer Menge anfällt, je höhermolekular das eingesetzte Polycarbonat der Formel (II) ist, kann gewünschtenfalls leicht in bekannter Weise abdestilliert werden.

Die nachfolgend als aliphatische Diole HO-A-OH charakterisierten Ausgangsverbindungen sind entweder literaturbekannt oder nach literaturbekannten Verfahren herstellbar.

Als HO-A-OH erfindungsgemäß geeignete Polyesterdiole sind beispielsweise Umsetzungsprodukte von zweiwertigen Alkoholen mit zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyesterpolyole verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiele hierfür seien genannt: Oxalsäure, Malonsäure, Bernsteinsäure, Adipinsäure, Azelainsäure, Sebacinsäure, Phthalsäure, Isophthalsäure, Terephthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren sowie hydrierte dimere Fettsäuren. Unter dimeren Fettsäuren versteht man Dimerisationsprodukte von ungesättigten Fettsäuren ($C_{18}$) wie Öl-, Linol- und Linolensäure; diese können anschließend zu den hydrierten dimeren Fettsäuren hydriert werden.

Als zweiwertige Alkohole kommen, gegebenenfalls, im Gemisch miteinander, beispielsweise Ethylenglykol, 1,2-und 1,3-Propylenglykol, 1,2-, 2,3-, 1,3- und 1,4-Butandiol, Pentandiole, Neopentylglykol, Hexandiole z.B. 1,6-Hexandiol, Trimethylhexandiole, 1,8-Octandiole, Decandiole, Dodecandiole, Octadecandiole, Diethylenglykol, Triethylenglykol, Tetraethylenglykol, Dipropylenglykol, Tripropylenglykol, Tetrapropylenglykol, 1,4-Cyclohexandimethanol, 1,1-Cyclohexan-dimethanol, Perhydrobisphenole z.B. 4,4'-(1-Methylethyliden)-biscyclohexanol, 2,2-Bis-(4-(2-hydroxyethoxy)-phenyl)-propan in Frage.

Möglich ist auch die Mitverwendung von dreiwertigen Alkoholen in untergeordneten Mengen wie beispielsweise Glycerin, Trimethylolethan und Trimethylolpropan.

Ferner kommen Ethylenoxid- bzw. Propylenoxidaddukte an die obengenannten zweiwertigen Alkohole in Frage sowie Polyethylenglykole, Polypropylenglykole und Polybutylenglykole.

Durch die Wahl des definierten Alkoholüberschusses wird der Gehalt an Hydroxyl-Endgruppen und damit das "mittlere" Molekulargewicht $\overline{M}n$ vorgegeben. Vorzugsweise werden Polyester aus ausschließlich aliphatischen Ausgangskomponenten eingesetzt.

Als HO-A-OH geeignete hydroxylgruppenhaltige Polyester im Sinne der Erfindung sind z.B. auch solche, die durch Polymerisation eines Lactons, beispielsweise $\epsilon$-Caprolacton oder durch Kondensation einer Hydroxycarbonsäure, beispielsweise von $\omega$-Hydroxycapronsäure auf einen Hydroxylgruppen enthaltenden Starter hergestellt werden. Das $\overline{M}n$ dieser Polyester ergibt sich wiederum rechnerisch wie vorstehend beschrieben.

Als HO-A-OH erfindungsgemäß geeignete Polyetherdiole sind beispielsweise die der Formel (III)

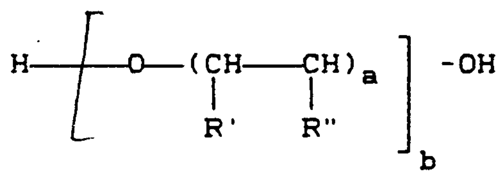
(III)

worin

R' und R" unabhängig voneinander H oder $C_1$-$C_4$-Alkyl sind,
a eine ganze Zahl von 1 bis 6 ist und
b eine ganze Zahl von 3 bis 140, insbesondere 3 bis 90 ist.

Beispiele dafür sind Poly(ethylenoxid)-glykole, Poly-(1,2-propylenoxid)-glykole, Poly-(1,3-propylenoxid)-glykole, Poly-(1,2-butylenoxid)-glykole, Poly-(tetrahydrofuran)-glykole, die entsprechenden Poly-(pentylenoxid)-glykole, Poly-(hexamethylenoxid)-glykole, Poly-(heptamethylenoxid)-glykole, Poly-(octamethylenoxid)-glykole, Poly-(nonamethylenoxid)-glykole und die Copolymeren oder Blockmischpolymeren aus beispielsweise Ethylenoxid und Propylenoxid.

Als HO-A-OH erfindungsgemäß geeignete Polysiloxandiole sind beispielsweise die der folgenden Formel (IV)

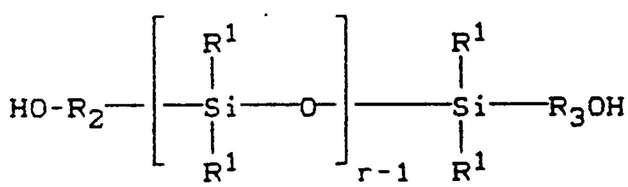
(IV)

Beispiele für die Reste $R^1$ in Formel (IV) sind aliphatische, cycloaliphatische, araliphatische und aromatische Reste, die noch durch Halogen oder Cyan oder Alkyl substituiert sein können; Beispiele für $R^1$ sind Methyl, Ethyl, Propyl, Chlorbutyl, Cyanethyl, Cyanbutyl, Phenyl, Chlorphenyl, Xylyl, Tolyl, Benzyl und Phenethyl. $R_2$ und $R_3$ sind beispielsweise aliphatische Reste wie $-CH_2-$ oder $-CH_2-CH_2-$, oder cycloaliphatische Reste,
r ist eine ganze Zahl von 5 bis 200, vorzugsweise von 15 bis 90.

Als HO-A-OH erfindungsgemäß einsetzbare Polythioetherdiole sind beispielsweise die, welche durch eine saure Kondensation von Thiodiglykol mit sich selbst oder mit anderen Diolen, wie beispielsweise Hexandiol-(1,6) hergestellt werden, und deren Molekulargewichte nach bekannten Verfahren reguliert werden.

Als HO-A-OH erfindungsgemäß einsetzbare Polyacetaldiole sind beispielsweise die, welche durch saure Kondensation von Diolen wie z.B. Diethylenglykol, Triethylenglykol, Butandiol-(1,4), Hexandiol-(1,6), mit aliphatischen Aldehyden, wie z.B. Formaldehyd, Acetaldehyd hergestellt werden, und deren Molekulargewichte nach bekannten Methoden reguliert werden

Als HO-A-OH erfindungsgemäß einsetzbar aliphatische Polycarbonatdiole sind beispielsweise die aus Glykolen wie 1,3-Propandiol, 1,4-Butandiol, 1,5-Pentandiol, 3-Methylpentandiol-1,5, Trimethylhexandiol-1,6,

1,6-Hexandiol, 1,12-Dodecandiol, 1,12-Octadecandiol, Diethylenglykol, Triethylenglykol und deren höhere Homologe, Dipropylenglykol, Tripropylenglykol, Neopentylglykol durch Umsetzung mit Diethylcarbonat oder Diphenylcarbonat bzw. durch Umsetzung mit Phosgen nach bekannten Verfahren hergestellt werden und ein $\overline{M}_n$ von 300 bis 15 000 besitzen.

Die nach dem erfindungsgemäßen Verfahren erhältlichen Vorkondensate eignen sich, wie bereits erwähnt, als Ausgangsbisphenole für die Herstellung von Polycarbonaten nach dem bekannten Zweiphasengrenzflächen-polykondensationsverfahren. Man erhält so beispielsweise die bekannten hochmolekularen aliphatisch-aromatischen Polycarbonat-Elastomeren.

Die Weiterverarbeitung der nach dem erfindungsgemäßen Verfahren erhältlichen Vorkondensate erfolgt beispielsweise gemäß DE-OS 27 26 376 (Le A 18 015) für Polyesterdiphenole, gemäß DE-OS 26 36 784 (Le A 17 025) für Polyetherdiphenole, und gemäß DE-OS 28 27 325 (Le A 18 819) für aliphatische Polycarbonatdiphenole. Entsprechendes gilt für die Vorkondensate mit Diphenol-carbonat-Endgruppen aus den Polysiloxandiolen, aus den Polythioetherdiolen und aus den Polyacetaldiolen.

Die durch diese Weiterverarbeitung erhältlichen plastischen, mehr oder weniger elastischen, segmentierten Polycarbonate können beispielsweise als Dichtungsmaterial, als Isoliermaterial in der Elektrotechnik sowie als Ausgangsmaterial für Schläuche und Automobilteile technisch Verwendung finden.

Die in nachfolgenden Beispielen sowie in der voranstehenden Beschreibung aufgeführten mittleren Zahlenmittelmolekulargewichte $\overline{M}n$ wurden durch Bestimmung der OH-Zahl ermittelt.

Die Bestimmung der OH-Zahlen der erfindungsgemäß erhältlichen Vorkondensate erfolgt durch Acylierung mit Acetanhydrid in Pyridin und Rücktitration der entstandenen Essigsäure und des Anhydridüberschusses mit NaOH. Dabei werden sowohl aliphatische als auch phenolische Hydroxylgruppen erfaßt.

Phenolisches OH wird durch photometrische Bestimmung mit $TiCl_4$ bestimmt.

## Beispiele

### Beispiel 1

Herstellung eines hydrierten Dimerfettsäure-Hexandiol-Polyesters mit Diphenolcarbonat-Endgruppen des 2,2-Bis-(4-hydroxyphenyl)-propans (Bisphenol A)

In einen Rührkessel werden 16 kg (4 Mol) eines hydrierten Dimerfettsäure-Hexandiol-Polyesters ($\overline{M}n$ 4000, OH-Zahl 28) und 2,034 kg Bisphenol A-Polycarbonat mit einer relativen Viskosität von $\eta$rel = 1,28 (gemessen an 0,5 g Polycarbonat in 100 ml $CH_2Cl_2$) als Granulat gegeben. Dazu werden als Umesterungskatalysator 13,7 ml 2N-Natronlauge gegeben. Unter Stickstoffatmosphäre wird das Reaktionsgemisch innerhalb 1 Stunde auf 200° C erhitzt. Man läßt noch weitere 12 Stunden bei dieser Temperatur rühren. Während dieser Zeit wird das gesamte Granulat langsam aufgelöst. Danach wird noch 4 Stunden bei dieser Temperatur unter $N_2$-Atm gerührt. Das leicht gefärbte, viskose Öl hat eine OH-Zahl von 26 (ber.: 24,8), entsprechend einem mittleren Molekulargewicht $\overline{M}n$ von 4308. Eine phenolische OH-Bestimmung mit $TiCl_4$ ergab nach photometrischer Analyse 0,8 % phenolisches OH entsprechend einem mittleren Molekulargewicht von 4250. Die Viskosität des isolierten Öls in 45 % Xylollösung beträgt 65 sec (gemessen in einem Auslaufbecher 4 DIN 53 211).

### Beispiel 2

Herstellung eines hydrierten Dimerfettsäure-Hexandiol-Polyesters mit Diphenolcarbonat-Endgruppen des Bisphenol A in Chlorbenzollösung

In einen 2 l Dreihalskolben mit Rückflußkühler werden 500 g (0,125 Mol) eines hydrierten Dimerfettsäure-Hexandiol-Polyesters ($\overline{M}n$ 4000), 94,06 g
Bisphenol A-Polycarbonat ($\eta$rel = 2,2, gemessen von 0,5 g in 100 ml $CH_2Cl_2$), 0,48 ml 2N Natronlauge und 300 ml Chlorbenzol gegeben. Die Reaktionsmischung läßt man 22 Stunden unter Rückfluß rühren. Während dieser Zeit geht das gesamte hochmolekulare Polycarbonat durch Umesterung in Lösung. Nach Abdestillieren des Chlorbenzols im Vakuum hat das leicht gefärbte, viskose Öl folgende Kennzahlen:
OH-Zahl 26,5 (ber.: 24,8), $\overline{M}n$ = 4226,4
Phenolisches OH nach $TiCl_4$: 0,8 % entsprechend $\overline{M}n$ 4250.

Viskosität in 45 % Xylollösung 64 sec (gemessen gemäß Beispiel 1).

Beispiel 3

Herstellung eines Polytetramethylenoxiddiols mit Diphenolcarbonat-Endgruppen des 2,2-Bis-(4-hydroxyphenyl)-propans (Bisphenol A)

In einen 2 l Dreihalsrührkolben werden 500 g (0,25 Mol) Polytetramethylenoxiddiol ($\overline{M}n$ 2000, OH-Zahl 56), 127,15 g Bisphenol A-Polycarbonat ($\eta$ rel 1,28) und 0,48 ml 2N Natronlauge vorgelegt. Unter Rühren und Stickstoffatmosphäre wird das Reaktionsgemisch innerhalb 1 Stunde auf 200° C erhitzt. Man läßt noch weitere 12 Stunden bei dieser Temperatur rühren, während das gesamte Polycarbonat durch Umesterung aufgelöst wird. Danach wird noch 2 Stunden bei dieser Temperatur gerührt. Das viskose Öl hat folgende Kennzahlen:
OH-Zahl = 44 [ber. 44,7 ($\overline{M}n$ 2508,6)]
Phenolisches OH nach $TiCl_4$: 1,34 ($\overline{M}n$ 2537).

Beispiel 4

Herstellung eines Hexandiol-Adipinsäurepolyesters mit Diphenolcarbonat-Endgruppen des Bisphenols A

In einem 2 l Dreihalskolben werden 500 g (0,25 Mol) Hexandiol-Adipinsäurepolyester ($\overline{M}n$ 2000, OH-Zahl 56), 127,15 g Bisphenol A-Polycarbonat ($\eta$ rel 1,28) und 0,48 ml 2N Natronlauge vorgelegt. Unter Rühren und Stickstoffatmosphäre wird das Reaktionsgemisch innerhalb 1 Stunde auf 200° C erhitzt. Man läßt noch weitere 14 Stunden bei dieser Temperatur rühren, während das gesamte Polycarbonat durch Umesterung aufgelöst wird. Nach weiterem Rühren (2 Stunden) erhält man ein bei 48° C schmelzendes Wachs das folgende Kennzahlen besitzt:
OH-Zahl: 45 [ber. 44,7 ($\overline{M}n$ 2508,6)]
Phenolisches OH nach $TiCl_4$: 1,33 ($\overline{M}n$ 2556)

**Patentansprüche**

**1.** Verfahren zur Herstellung von Vorkondensaten mit Diphenolcarbonat-Endgruppen der Formel (I)

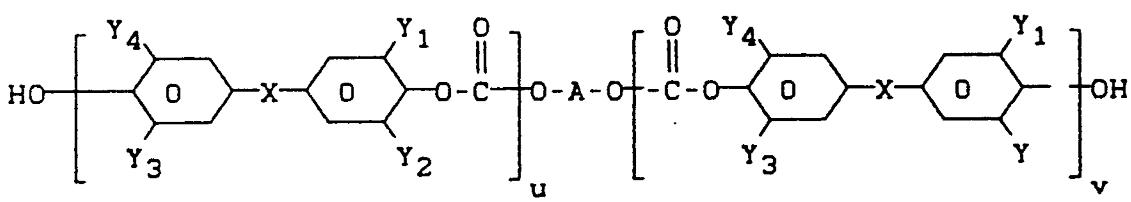

worin

X eine Einfachbindung, ein $C_1$-$C_5$-Alkylen, ein $C_2$-$C_5$-Alkyliden

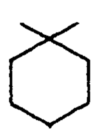 , $-O-$, $-S-$, $-SO_2-$, 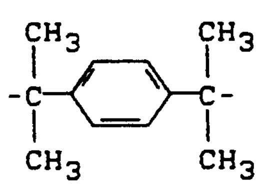 oder

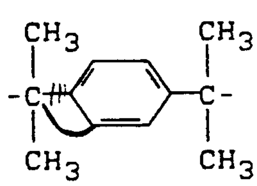 bedeutet und

$Y_1$ bis $Y_4$ gleich oder verschieden sind und Wasserstoff, $C_1$-$C_4$-Alkyl oder Halogen bedeuten und
u und v unabhängig voneinander eine ganze Zahl von 1 bis 4 sind,
-O-A-O- ein aliphatischer Diolatrest ist, der über Carbonatgruppen verlängert sein kann,

dadurch gekennzeichnet, daß man aromatische Polycarbonate der Formel (II)

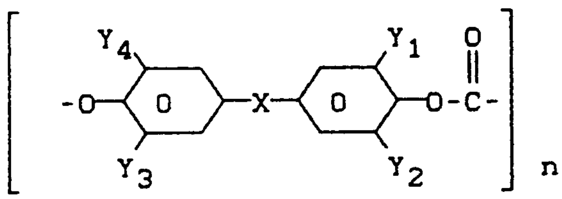

(II)

worin
X und $Y_1$-$Y_4$ die für Formel (I) genannte Bedeutung haben,
und n eine ganze Zahl von 4 bis 1200, ist,
mit aliphatischen Diolen HO-A-OH mit mittleren Molekulargewichten $\overline{M}n$ (Zahlenmittel) von 300 bis 15000, entweder in der Schmelze bei Temperaturen von 160° C bis 250° C, oder in Lösung eines organischen Lösungsmittels für das herzustellende Polymere mit Diphenolcarbonat-Endgruppen gegebenenfalls in Gegenwart von Katalysatoren innerhalb von 2 bis 60 Stunden umestert, wobei pro Mol aliphatisches Diol 1,4 bis 10 Struktureinheiten der Formel (II) eingesetzt werden.

2. Verfahren gemäß Anspruch 1, dadurch gekennzeichnet, daß man Polycarbonate der Formel (II) einsetzt, worin n eine ganze Zahl von 80 bis 800 ist.

3. Verfahren gemäß Ansprüchen 1 und 2, dadurch gekennzeichnet, daß pro Mol aliphatisches Diol 1.6 bis 6 Struktureinheiten der Formel (II) eingesetzt werden.

4. Verfahren gemäß Anspruch 3, dadurch gekennzeichnet, daß pro Mol aliphatisches Diol 1,8 bis 3 Struktureinheiten der Formel (II) eingesetzt werden.

5. Verfahren gemäß Anspruch 3, dadurch gekennzeichnet, daß pro Mol alipahtisches Diol 2 Struktureinheiten der Formel (II) eingesetzt werden.

6. Verfahren gemäß Ansprüche 1 bis 5, dadurch gekennzeichnet, daß die aliphatischen Diole mittlere Molekulargewichte $\overline{M}n$ (Zahlenmittel) von 500 bis 10 000 haben.

7. Vorkondensate der Formel (I), worin -O-A-O- der Formel (IVa)

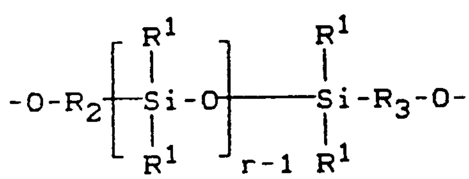

(IVa)

entspricht, worin $R^1$ ein aliphatischer, cycloaliphatischer, araliphatischer oder aromatischer Rest ist, der noch durch Halogen oder Cyan oder Alkyl substituiert sein kann, und worin $R_2$ und $R_3$ aliphatische oder cycloaliphatische Reste sind und worin r eine ganze Zahl von 5 bis 200 ist, erhältlich gemäß Verfahren der Ansprüche 1 bis 6.

## Claims

1. A process for the production of diphenol-terminated precondensates corresponding to formula (I)

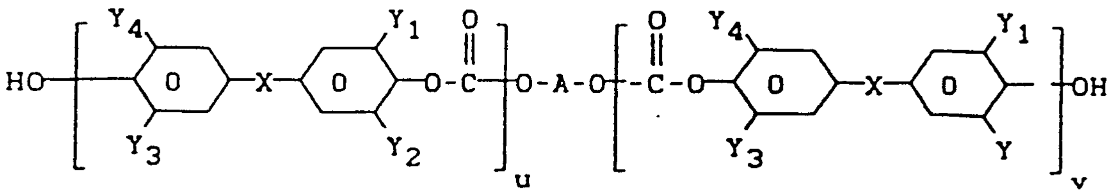

in which

X is a single bond a $C_{1-5}$ alkylene, a $C_{2-5}$ alkylidene

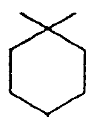 , -O-, -S-, $-SO_2-$, 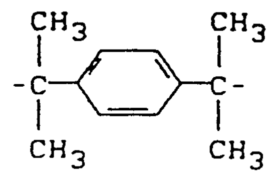 or

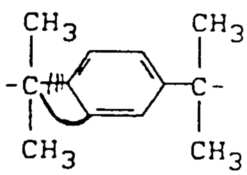

and

$Y_1$ to $Y_4$ may be the same or different and represent hydrogen, $C_{1-4}$ alkyl or halogen and

u and v independently of one another represent an integer of 1 to 4,

-O-A-O- is an aliphatic diolate residue which may be extended by carbonate groups,

characterized in that aromatic polycarbonates corresponding to formula (II)

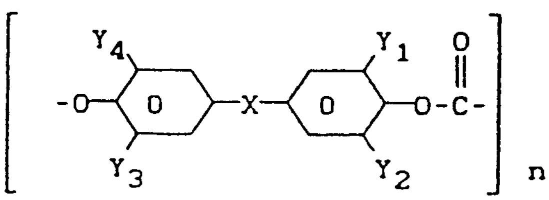 (II)

in which

X and $Y_1$-$Y_4$ are as defined for formula (I) and

n is an integer of 4 to 1,200, are transesterified with aliphatic diols HO-A-OH having average molecular weights $\overline{M}n$ (number average) of 300 to 15,000 over a period of 2 to 60 hours either in the melt at temperatures of 160 to 250 °C or in solution in an organic solvent for the diphenol-carbonate-terminated polymer to be produced in the presence of catalysts, 1.4 to 10 structural units corresponding to formula (II) being used per mol aliphatic diol.

2. A process as claimed in claim 1, characterized in that polycarbonates corresponding to formula (II) in which n is an integer of 80 to 800 are used.

3. A process as claimed in claims 1 and 2, characterized in that 1.6 to 6 structural units corresponding to formula (II) are used per mol aliphatic diol.

4. A process as claimed in claim 3, characterized in that 1.8 to 3 structural units corresponding to formula (II) are used per mol aliphatic diol.

5. A process as claimed in claim 3, characterized in that 2 structural units corresponding to formula (II) are used per mol aliphatic diol.

6. A process as claimed in claims 1 to 5, characterized in that the aliphatic diols have average molecular weights $\overline{M}$ (number average) of 500 to 10,000.

7. Precondensates corresponding to formula (I) in which -O-A-O- corresponds to formula (IVa)

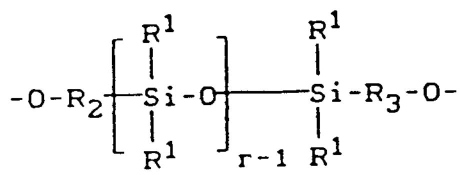

(IVa)

in which $R^1$ is an aliphatic, cycloaliphatic, araliphatic or aromatic radical which may be substituted by halogen or cyano or alkyl and in which $R_2$ and $R_3$ are aliphatic or cycloaliphatic radicals and in which r is a number of 5 to 200,
obtainable by the process claimed in claim 1 to 6.

## Revendications

1. Procédé de production de précondensats porteurs de groupes terminaux carbonate de diphénol, de formule (I)

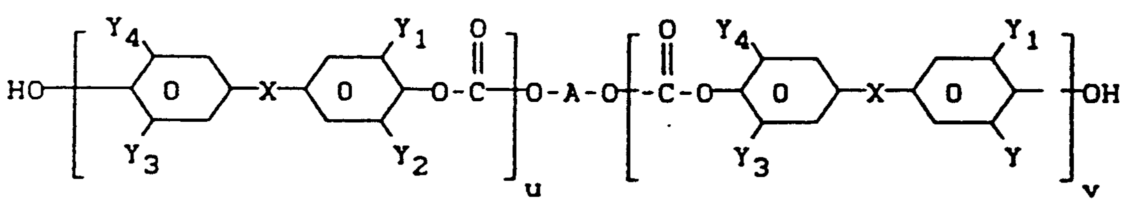

dans laquelle

X est une liaison simple, un groupe alkylène en $C_1$ à $C_5$, un groupe alkylidène en $C_2$ à $C_5$

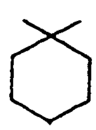 , -O-, -S-, -$SO_2$-, 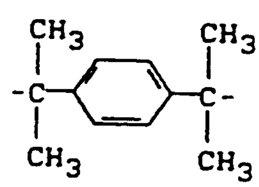 ou

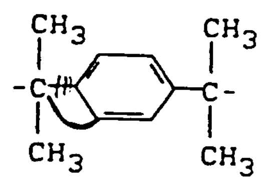

et

$Y_1$ à $Y_4$ sont identiques ou différents et représentent l'hydrogène, un groupe alkyle en $C_1$ à $C_4$ ou un halogène

u et v représentent indépendamment l'un de l'autre un nombre entier ayant une valeur de 1 à 4,

-O-A-O- est un reste diolate aliphatique qui peut être prolongé par des groupes carbonate,

caractérisé en ce qu'on transestérifie des polycarbonates aromatiques de formule (II)

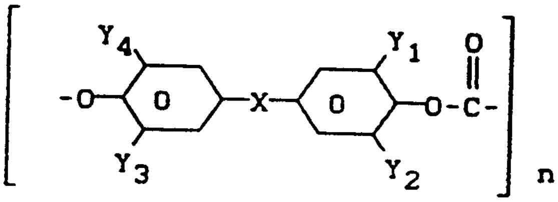

(II)

dans laquelle

X et $Y_1$-$Y_4$ ont la définition mentionnée pour la formule (I)

et n est un nombre entier de 4 à 1200,

avec des diols aliphatiques HO-A-OH ayant des poids moléculaires moyens Mn (moyennes numériques) de 300 à 15 000, à l'état fondu à des températures de 160 à 250 °C ou en solution dans un solvant organique pour le polymère porteur de groupes carbonate de diphénol terminaux devant être produits, le cas échéant en présence de catalyseurs, en une durée de 2 à 60 heures, en utilisant par mole de diol aliphatique 1,4 à 10 motifs structuraux de formule (II).

**2.** Procédé suivant la revendication 1, caractérisé en ce qu'on utilise des polycarbonates de formule (II) dans laquelle n est un nombre entier de 80 à 800.

**3.** Procédé suivant les revendications 1 et 2, caractérisé en ce qu'on utilise par mole de diol aliphatique 1,6 à 6 motifs structuraux de formule (II).

**4.** Procédé suivant la revendication 3, caractérisé en ce qu'on utilise par mole de diol aliphatique 1,8 à 3 motifs structuraux de formule (II).

**5.** Procédé suivant la revendication 3, caractérisé en ce qu'on utilise par mole de diol aliphatique 2 motifs structuraux de formule (II).

**6.** Procédé suivant les revendications 1 à 5, caractérisé en ce que les diols aliphatiques ont des poids moléculaires moyens Mn (moyennes numériques) de 500 à 10 000.

**7.** Précondensats de formule (I), dans laquelle -O-A-O- répond à la formule (IVa)

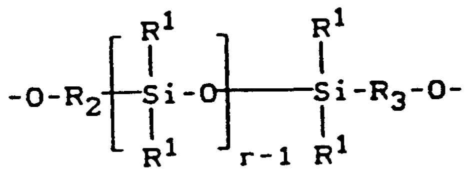

(IVa)

où $R^1$ est un reste aliphatique, cycloaliphatique, araliphatique ou aromatique oui peut encore être substitué par un halogène ou par un radical cyano ou alkyle, et $R^2$ et $R^3$ sont des restes aliphatiques ou cycloaliphatiques et r est un nombre entier de 5 à 200, pouvant être obtenus par le procédé suivant les revendications 1 à 6.